# EUROPÄISCHE PATENTSCHRIFT

(11) **EP 0 872 667 B1**
(45) Veröffentlichungstag und Bekanntmachung des Hinweises auf die Patenterteilung: **19.09.2001**
(21) Anmeldenummer: 98104234.4
(22) Anmeldetag: 10.03.1998
(51) Int. Cl.: F16H 61/00, F16J 15/00

(54) **Dichtungssystem für Kraftfahrzeuge**
Sealing system for motor vehicles
Système d'étanchéité pour véhicule automobile

(30) Priorität: 15.04.1997 DE 19715609
(43) Veröffentlichungstag der Anmeldung: 21.10.1998
(73) Patentinhaber: Federal-Mogul Sealing Systems GmbH, 57562 Herdorf (DE)
(72) Erfinder: Krauland, Andreas, Dipl.-Ing., 51467 Bergisch-Gladbach (DE)

(56) Entgegenhaltungen:
- EP-A- 0 284 216
- DE-A- 4 041 253
- DE-A- 19 533 977

## Beschreibung

Die Erfindung betrifft ein Dichtungssystem für Kraftfahrzeuge mit einem Ventilkörper zur Steuerung des ölhydraulischen Umlaufes eines automatischen Getriebes, wobei der Ventilkörper eine Trennplatte aufweist, bei der auf jeder Seite eine mit der Trennplatte verbundene Dichtung angeordnet ist.

Automatische Getriebe von Kraftfahrzeugen weisen eine Vielzahl'von Einzelteilen auf, die innerhalb des Getriebes gegen Öl abgedichtet werden müssen. Zur Steuerung des ölhydraulischen Umlaufes ist im Getriebe ein Ventilkörper angeordnet, in welchem sich Ventilteile unterschiedlichster Bauart erstrecken. Der Ventilkörper besteht aus einem oberen und unteren Bauteil, zwischen denen sich eine, eine Vielzahl von Öffnungen aufweisende Trennplatte erstreckt. Die DE OS 3 831 255 offenbart eine solche Trennplatte. Da sich bei der Montage der Trennplatte die bisher verwendeten separaten Dichtungen auf der Ober- und Unterseite der Trennplatte nur schwierig montieren ließen, wurde gemäß des genannten Stands der Technik vorgeschlagen, die Trennplatte bereits vor dem Einbau mit Dichtungen zu versehen. Diese Maßnahme führte bereits zu einer Erleichterung der Montage.

Im Hinblick auf eine verbesserte Montagemöglichkeit liegt der Erfindung die Aufgabe zugrunde, die bei einem gattungsgemäßen Getriebe notwendigen Einzelteile zu einer kompakteren Einbaueinheit zusammenzufassen.

Diese Aufgabe wird erfindungsgemäß durch die kennzeichnenden Merkmale des Patentanspruchs 1 gelöst. Vorteilhafte Ausgestaltungen der Erfindung sind in den Unteransprüchen dokumentiert. Mit dem erfindungsgemäßen Dichtungssystem werden mehrere bisher einzeln zu montierende Bauteile in ein einziges Teil integriert. Dies führt zu einer deutlichen Erleichterung bei der Montage und weist im Hinblick auf Transport und Lagerkosten Vorteile auf.

Die Erfindung ist anhand eines Ausführungsbeispieles in der Zeichnung dargestellt und wird im folgenden näher erläutert. Es zeigen:
- Figur 1: perspektive Ansicht eines herkömmlichen Getriebes mit Ventilkörper
- Figur 2: Draufsicht eine erfindungsgemäßen Dichtungssystems
- Figur 3: Ansicht gemäß Schnittlinie III-III der Figur 2

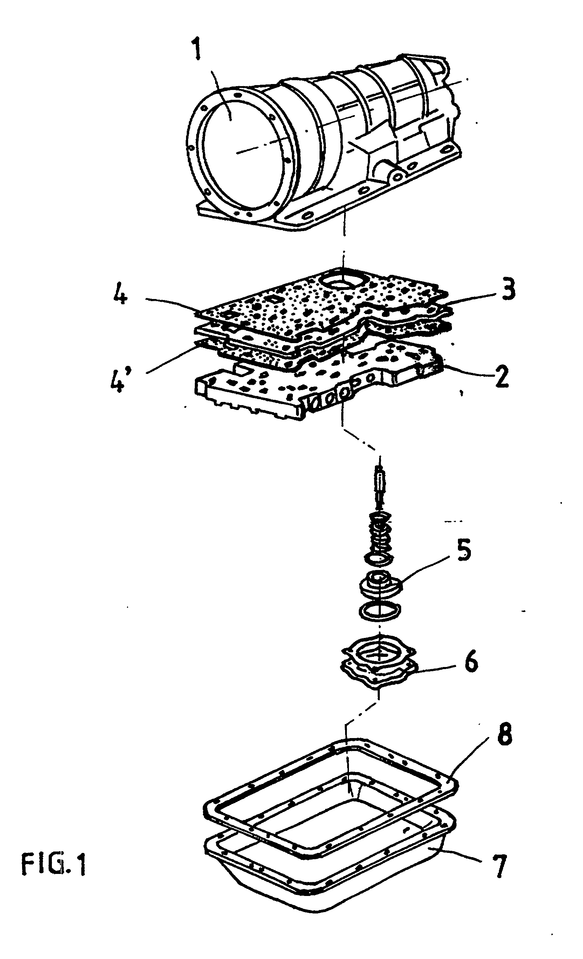

Die Figur 1 zeigt eine allgemeine Konstruktion eines automatischen Getriebes (1) für Kraftfahrzeuge mit einem Ventilkörper (2) zur Steuerung des ölhydraulischen Umlaufes. Der Ventilkörper (2) weist eine Trennplatte (3) auf, die mittels Dichtungen (4,4') gegenüber dem Ventilkörper (2) und dem Getriebe (1) abdichten. Im Ventilkörper sind eine Vielzahl von Steuerteilen angeordnet, dargestellt ist beispielsweise ein Steuerbauteil (5) in Form eines Kolben, der mittels eines Deckels (6) abgedichtet ist. Die Ölwanne (7) wird über eine separate Ölwannendichtung (8), die als Rahmendichtung ausgebildet ist, zum Getriebe (1) abgedichtet.

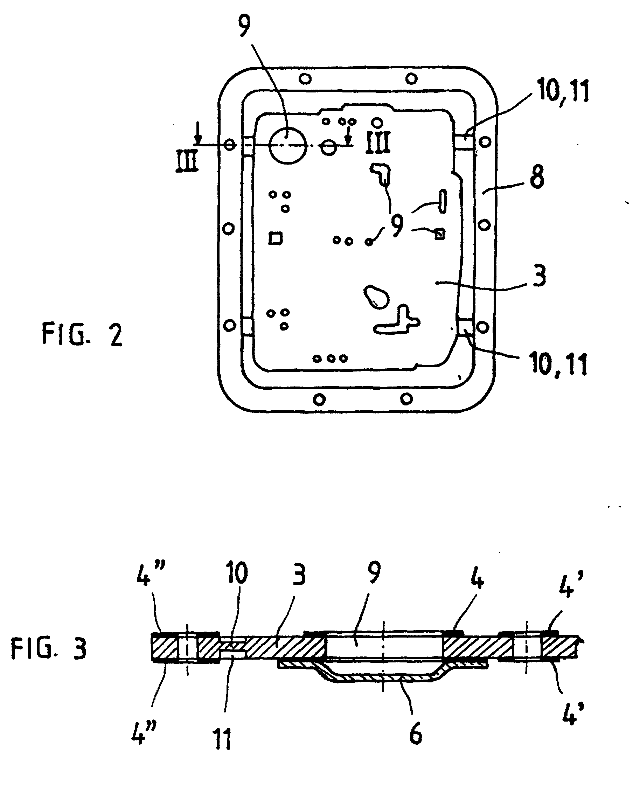

In der Figur 2 ist ein erfindungsgemäßes Dichtungssystem dargestellt. Die Trennplatte (3) besteht aus einem Metallblech und weist eine Vielzahl unterschiedlicher Öffnungen (9) auf. Erfindungsgemäß ist die Trennplatte (3) mit der Ölwannendichtung (8) bzw. mit dem ebenfalls aus metallischem Werkstoff bestehenden Grundkörper verbunden. Beide Bauteile können aus einem einzigen Metallblech herausgeformt werden, wobei am Randbereich Stege (10) gebildet werden, um eine Verbindung zu schaffen. Die Verbindung über Stege (10) ist vorteilhaft, weil zum Beispiel durch Sollbruchstellen (11) in den Stegen (10) die Möglichkeit besteht, beide Bauteile leicht von einander zu trennen. Dies kann zum Beispiel notwendig sein, wenn die Ölwanne (7) aus Wartungsgründen vom Getriebe (1) entfernt werden muß. Gleichzeitig mit der Ölwannendichtung kann auf der Trennplatte (3) bereits vor dem Einbau, der Deckel (6) festgeschraubt, angeschweißt oder angeformt sein. Vorzugsweise wird die Dichtung (4, 4') der Trennplatte im Siebdruckverfahren aufgetragen, so daß gleichzeitig auch die Ölwannendichtung (8) bzw. der Grundkörper mit dem als Dichtung (4', 4") fungierenden elastomeren Werkstoff beschichtet wird.

Es wäre auch denkbar, Trennplatte (3) und Ölwannendichtung (8) separat herzustellen und über Stege aus elastomerem Werkstoff mit einander zu verbinden. Durch solche elastische Stege könnten unterschiedliche Montageebenen zwischen Trennplatte und Ölwannendichtung ausgeglichen werden.

## Patentansprüche

1. Dichtungssystem für Kraftfahrzeuge mit einem Ventilkörper (2) zur Steuerung des ölhydraulischen Umlaufes eines automatischen Gebtriebes (1), wobei der Ventilkörper (2) eine Trennplatte (3) aufweist, bei der auf jeder Seite eine mit der Trennplatte (3) verbundene Dichtung (4,4',4'') angeordnet ist, **dadurch gekennzeichnet, daß** die Trennplatte (3) mit einer rahmenförmigen Ölwannendichtung (8) zur Bildung einer Einbaueinheit verbunden ist.

2. Dichtungssysteme nach Anspruch 1, **dadurch gekennzeichnet, daß** die Ölwannendichtung (8) und die Trennplatte (3) einstückig miteinander verbunden sind.

3. Dichtungssysteme nach den Ansprüchen 1 und 2, **dadurch gekennzeichnet, daß** die Verbindung zwischen Ölwannendichtung (8) und Trennplatte (3) stegförmig ausgebildet ist.

4. Dichtungssysteme nach den Ansprüchen 1 bis 3, **dadurch gekennzeichnet, daß** die Stege (10) eine Sollbruchstelle (11) aufweisen.

5. Dichtungssysteme nach mindestens einem der Ansprüche 1 bis 4, **dadurch gekennzeichnet, daß** die Trennplatte (3) und die Ölwannendichtung (8) aus einem metallischen Grundkörper bestehen, auf dem im Siebdruckverfahren als Dichtung (4, 4', 4") fungierender elastomerer Werkstoff aufgetragen ist.

6. Dichtungssystem nach einem der Ansprüche 1 bis 4, **dadurch gekennzeichnet, daß** die Trennplatte (3) und die Ölwannendichtung (8) aus zwei separaten Grundkörpern bestehen, die über aus elastomerem Werkstoff gebildeten Stegen miteinander verbunden sind.

7. Dichtungssystem nach mindestens einem der Ansprüche 1 bis 6, **dadurch gekennzeichnet, daß** die Trennplatte (3) einen Deckel (6) zur Abdeckung von Steuerbauteilen (5) aufweist.

8. Dichtunssystem nach Anspruch 7, **dadurch gekennzeichnet, daß** der Deckel (6) mit der Trennplatte (3) fest verbunden ist.

## Claims

1. Sealing system for automotive vehicles, having a valve body (2) to control the circulation of hydraulic oil of an automatic transmission (1), the valve body (2) having a separating plate (3) on each side of which is disposed a seal (4, 4', 4'') connected to the separating plate (3), **characterised in that** the separating plate (3) is connected to a frame-shaped oilpan gasket (8) to form a fitting unit.

2. Sealing systems according to claim 1, **characterised in that** the oilpan gasket (8) and the separating plate (3) are connected to one another to form one piece.

3. Sealing systems according to claims 1 and 2, **characterised in that** the connection between the oilpan gasket (8) and the separating plate (3) is configured in web form.

4. Sealing systems according to claims 1 to 3, **characterised in that** the webs (10) have a pre-determined breaking point (11).

5. Sealing systems according to at least one of claims 1 to 4, **characterised in that** the separating plate (3) and the oilpan gasket (8) comprise a metallic basic body, on which elastomeric material acting as a seal (4, 4', 4'') is applied by means of a screen printing method.

6. Sealing system according to one of claims 1 to 4, **characterised in that** the separating plate (3) and the oilpan gasket (8) consist of two separate basic bodies, which are connected to one another via webs formed from elastomeric material.

7. Sealing system according to at least one of claims 1 to 6, **characterised in that** the separating plate (3) has a cover (6) to cover control components (5).

8. Sealing system according to claim 7, **characterised in that** the cover (6) is securely connected to the separating plate (3).

## Revendications

1. Système d'étanchéité pour véhicule automobile comprenant un corps de soupape (2) pour la commande de la circulation d'huile hydraulique d'une boîte de vitesse automatique (1), le corps de soupape (2) comprenant une plaque de séparation (3) au niveau de laquelle chaque côté est pourvu d'une garniture d'étanchéité (4, 4', 4") reliée à la plaque de séparation (3), **caractérisé en ce que** la plaque de séparation (3) est reliée à une garniture d'étanchéité de carter d'huile (8) en forme de cadre pour former une unité de montage.

2. Système d'étanchéité selon la revendication 1, **caractérisé en ce que** la garniture d'étanchéité de carter d'huile (8) et la plaque de séparation (3) sont reliées l'une à l'autre de manière monobloc.

3. Système d'étanchéité selon les revendications 1 et 2, **caractérisé en ce que** la liaison entre la garniture d'étanchéité de carter d'huile (8) et la plaque de séparation (3) est réalisée sous la forme d'entretoises.

4. Système d'étanchéité selon les revendications 1 à 3, **caractérisé en ce que** les entretoises (10) présentent un point de rupture (11).

5. Système d'étanchéité selon au moins une des revendications 1 à 4, **caractérisé en ce que** la plaque de séparation (3) et la garniture d'étanchéité de carter d'huile (8) sont constituées par un corps de base métallique sur lequel est appliqué par un procédé de sérigraphie un matériau élastomère servant de garniture d'étanchéité (4, 4', 4").

6. Système d'étanchéité selon l'une des revendications 1 à 4, **caractérisé en ce que** la plaque de séparation (3) et la garniture d'étanchéité de carter d'huile (8) consistent en deux corps de base séparés qui sont reliés l'un à l'autre par des entretoises formées à partir d'un matériau élastomère.

7. Système d'étanchéité selon au moins une des revendications 1 à 6, **caractérisé en ce que** la plaque de séparation (3) comprend un couvercle (6) pour recouvrir des pièces de construction de commande (5).

8. Système d'étanchéité selon la revendication7, **caractérisé en ce que** le couvercle (6) est fixement relié à la plaque de séparation (3).
